# EUROPEAN PATENT SPECIFICATION

(11) **EP 2 699 492 B1**
(45) Date of publication and mention of the grant of the patent: **16.03.2016**
(21) Application number: 12774847.3
(22) Date of filing: 20.04.2012
(51) Int. Cl.: B65D 85/68, B65D 61/00, F03D 1/00

(54) **BLADE CARRIER**
FLÜGELTRÄGER
SUPPORT DE PALE

(30) Priority: 20.04.2011 DK 201170194
(43) Date of publication of application: 26.02.2014
(73) Proprietor: A2Sea A/S, 7000 Fredericia (DK)
(72) Inventor: RAVNEBERG, Einar, DK-5300 Kerteminde (DK)
(74) Representative: Nielsen, Leif
(86) International application number: PCT/DK2012/050132
(87) International publication number: WO 2012/143014

(56) References cited:
- EP-A2- 2 239 459
- WO-A2-2010/105626
- FR-A1- 2 756 545
- JP-A- 2010 216 317
- US-A1- 2009 274 529

## Description

### Field of the Invention

The present invention relates to a blade carrier, for windmill blades, in particular for offshore windmills, comprising a frame, where said frame comprises a number of modules each having a root receiving end and a tip receiving end for accommodating one windmill blade.

The invention also relates to a method of operating a blade carrier.

### Background of the Invention

Transporting windmill blades to windmill construction sites is a demanding and time consuming task, in particular for offshore windmills. When raising offshore windmills the windmill tower and blades are transported on a ship to the site. The blades are manually bolted to the ship, or some construction resting on said ship. This particular task is both time consuming and also a very dangerous task for the workers fixing or releasing the blades, especially in strong winds.

The ships used for offshore windmills are very expensive to run, and these expenses contribute to a substantial amount of the total windmill cost. Thus the time spend in loading and releasing blades to the ships contributes directly to the cost of the windmill installation.

WO 2010/105626 A2 disclose a transport casing for a windmill blade. The casing comprises two support arrangement - a root end support arrangement for supporting the root end of the blade and a tip end support arrangement for supporting the tip end of the blade. Each support arrangement comprises a first part and a second part. The first and second part each forms a substantially solid body. The first and second part when assembled has a cut-out corresponding to the shape of the blade at the location of the support arrangement. The first and second parts are made of a synthetic polymer and form a self-supporting structure, when assembled and transporting a wind turbine blade.

Furthermore US 2009/274529, EP 2239459 and JP 2010216317 disclose systems for transport of wind mill blade. In these systems the root of the wind mill blade is mechanically attached to a clamp system. None of these documents disclose a root receiving clamp working with pneumatic actuators in order to provide a safe way to transport wind mill blades.

### Object of the Invention

It is the object of this invention to provide a safe and easy way to transport windmill blades, ideally from the blade factory until the final mounting on the turbine.

### Description of the Invention

This is achieved by a blade carrier according to the introduction that is peculiar in that said root receiving end comprises an annular root receiving pneumatic clamp adapted to receive the root end of a windmill blade, that said annular root receiving pneumatic clamp is arranged for establishing an open and a closed state that said annular root receiving pneumatic clamp comprises an actuator which is operated to change between the two states, and where said tip receiving end comprises a tip receiving pneumatic clamp adapted to support part of a windmill blade edge and that said tip receiving pneumatic clamp is arranged for establishing an open and a closed state, that said tip receiving pneumatic clamp comprises an actuator which is operated to change between the two states, and that the blade carrier comprises pneumatic conduits connecting the pneumatic clamps with a pressure source and that said closed states provides a securing of the blade in the blade carrier whereas the open states makes it possible to insert or remove the blade.

The blade carrier is primarily intended to be used on and during loading and off-loading of ships that is used in offshore windmill installations. The ships used for these purposes are very expensive to use, and thus loading and unloading time contributes significantly to the costs of raising windmills. When loading the ship the blade carrier can have a multiple of windmill blades already secured to the blade carrier, and the blade carrier can then be loaded onto the ship by means of one or two cranes, slided onboard or driven aboard by a suitable truck.

When the blades need to be unloaded at the site where the windmill is raised, rough weather is common, and thus not only loading times but safety for the operators become very important. Currently, blades have been bolted in place to carriers, usually in the root of the blade, and then the operators needs to manually remove these bolts before removal of blades by a crane. This process includes heavy machinery and loose parts, present a danger to other personnel on the vessel. Storage and handling of the loose parts is time consuming and is increasing the risks on the vessel and on quay side.

The invention solves these shortcomings by securing the blades by pneumatic clamps. In particular an annular root receiving pneumatic clamp for securing the root end of a blade, and a tip receiving pneumatic clamp for securing the tip of the blade. By tip of the blade is meant a place on the blade closer to the point than the root of the blade, and not necessarily the point itself. Often it is advantageous to support the blade at the root and two thirds of the way to the point of the blade. This is to give the blade proper support during transport. This means that the blades can be secured or loosened without use of any tools, while it at the same time can be done fast. This result in faster turnaround times at the sites where the mills are raised, while at the same time ensures operator safety.

The pneumatic clamps comprise an open and a closed state, where the open state allows a blade to be inserted or removed into the clamps, and where the closed state secures the blade to the blade carrier. The clamps are operated between the two states by an actuator and are connected to a pressure source by pneumatic conduits. The actuators need not to be pneumatic but could be electrical or hydraulic. The pressure source is preferably an air compressor. The compressor can either be located on the blade carrier itself, or it can be situated on the vessel and connected to the blade carrier by pneumatic conduits.

To protect the blades the pneumatic clamps can be lined with a soft or protecting material, such that the surface of the blades will not be scratched during on and off-loading. Likewise the frame of the blade carrier can be lined with protecting material to protect the blade during on and off-loading, if the blade accidentally collides with the frame.

The invention also relates to a method, for operating a blade carrier according to claim 1, comprising the following steps;
a) providing a blade carrier comprising at least one root receiving pneumatic clamp, and at least one tip receiving pneumatic clamp,
b) inserting a root end of a blade into a root receiving pneumatic clamp,
c) securing said root end in the root receiving pneumatic clamp by pneumatic activation of said root receiving pneumatic clamp,
d) inserting a tip end of a blade into a tip receiving pneumatic clamp,
e) securing said tip end in the tip receiving pneumatic clamp by pneumatic activation of said tip receiving pneumatic clamp.

This method ensures that the blade is securely stored in the blade carrier without use of any tools, thus providing faster loading and unloading time while ensuring the safety of operators.

In a preferred embodiment the blade carrier is peculiar in, that said annular root receiving pneumatic clamp and the tip receiving pneumatic clamp comprise a passive closed state.

This means that the clamps need to be under pressure to force the clamp into the open position. When the clamp is cut off from the pressure source by the actuator, the clamp will automatically revert to the closed position. This means that the blades are secure in the carrier during transit without a pressure source, and thus a pressure source need only be connected or turned on when the blades need to be on or off-loaded. It also achieves that the blades remain secure even if the pressure source fails, or a malfunction causes a leakage etc.

In a further embodiment the blade carrier is peculiar in, that a common activating member is provided to activate the actuators in one module for one windmill blade.

This common activating member can either be provided near the root end of the blade, at the base of the blade carrier at an operating console, or even be remotely located either as a part of an operating console on the vessel or as a remote control. This means that an operator can open and close the clamps without being in physical contact with the blade, thus further improving the safety of the blade carrier. One activating member can be provided for each module, or the same activating member can be used for all the modules, along with a switch for selecting which module to activate.

In a further embodiment the blade carrier is peculiar in, that said tip receiving pneumatic clamp is connected with the tip receiving end of said frame by a hinge.

To save space blades in the blade carrier are often stacked vertically. This means it is advantageous to be able to remove a tip receiving pneumatic clamp from the path of lower blades that needs to be either loaded or unloaded. To achieve this the tip receiving pneumatic clamp is connected to the frame by a hinge such that clamp can rotate into a position parallel with the frame, and thus clear space for blades that need to be moved to or from a lower position in the blade carrier.

In a further embodiment the blade carrier is peculiar in, that said tip receiving pneumatic clamp is adapted to partially enclose the blade.

The tip receiving pneumatic clamp can preferably be U-shaped or a similar shape such as to provide a saddle for the blade, such that the blade can rest in the clamp, while providing easy access in and out of the clamp during on and off-loading.

In a further embodiment the blade carrier is peculiar in, that said tip receiving pneumatic clamp is rotatably arranged on said hinge, and where said rotation is pneumatically activated.

In order to be able to remove the tip receiving pneumatic clamp as described earlier in an automatic fashion, the hinge can be connected to the pneumatic conduits, and activated by for instance the common activating member, such as to provide automatic rotation of the hinge. This means that the operators can move the clamp without actual physical interaction with the clamp.

Other means of removing the tip receiving pneumatic clamp, like for instance an electrical actuator, or a form of electrical motor can also be used in place of pneumatics if desired. Also in one embodiment the tip receiving pneumatic clamp can be moved manually if no other means are available.

In a further embodiment the blade carrier is peculiar in, that said blade carrier comprises releasable connection means adapted to connect individual modules to each other.

This achieves that the individual models can be connected to each other to create a modular blade carrier that can be arranged as needed. Also the individual modules can be transported on trucks, on train cars or similar. This means that a blade can be inserted into a module at the factory that produces the blades, and the module can then be shipped to a port and at the port be connected to other modules to create a blade carrier that can readily be loaded onto a ship.

In a further embodiment the blade carrier is peculiar in, that said blade carrier system comprises fifteen modules arranged in a three by five pattern.

It has been found that a blade carrier carrying fifteen blades is preferred for handling purposes. This means that five windmills can be supplied from a single carrier. One or more blade carriers can be loaded onto a ship as necessary. The blade carrier can also be arranged in other patters as suitable.

In a further embodiment the blade carrier is peculiar in, that said annular root receiving pneumatic clamp is comprised of a plurality of clamping segments.

The annular root receiving pneumatic clamp can be comprised of two or more clamping segments. For practical reasons during construction it may be advantageous to segment to annular root receiving clamp into two or more pieces. These segments can either operate individually or be controlled as one clamp, for instance by a common activating member.

### Description of the Drawing

The invention will be explained in more detail below with reference to the accompanying drawing, where:
- fig. 1.: shows the root receiving end of the blade carrier,
- fig. 2: shows four modules at the root receiving end of the blade carrier,
- fig. 3: shows the tip receiving end of the blade carrier,
- fig. 4: shows the tip receiving pneumatic clamp rotated,
- fig. 5: shows the pneumatic conduits,
- fig. 6.: shows the blade carrier with mounted blades,
- fig. 7.: shows the root receiving end of the blade carrier segmented into three parts.

In the explanation of the figures, identical or corresponding elements will be provided with the same designations in different figures. Therefore, no explanation of all details will be given in connection with each single figure/embodiment.

### Detailed Description of the Invention

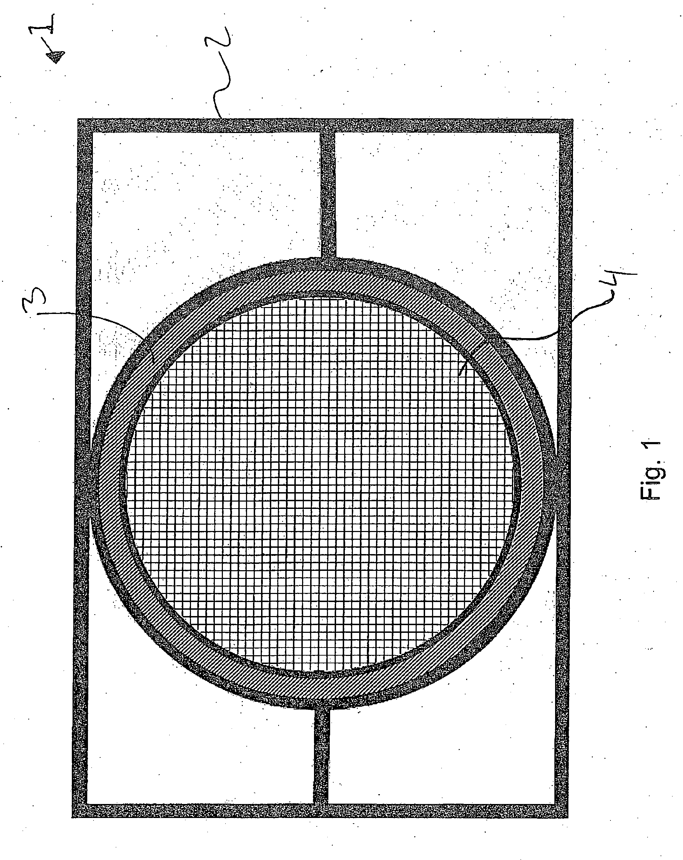

Figure 1 shows a cross section of the blade carrier 1 at the root receiving end. The blade carrier 1 comprises a frame 2. Attached to the frame 2 is an annular root receiving pneumatic clamp in the closed position 3. Mounted in the root receiving clamp 3 is the root of a windmill blade 4.

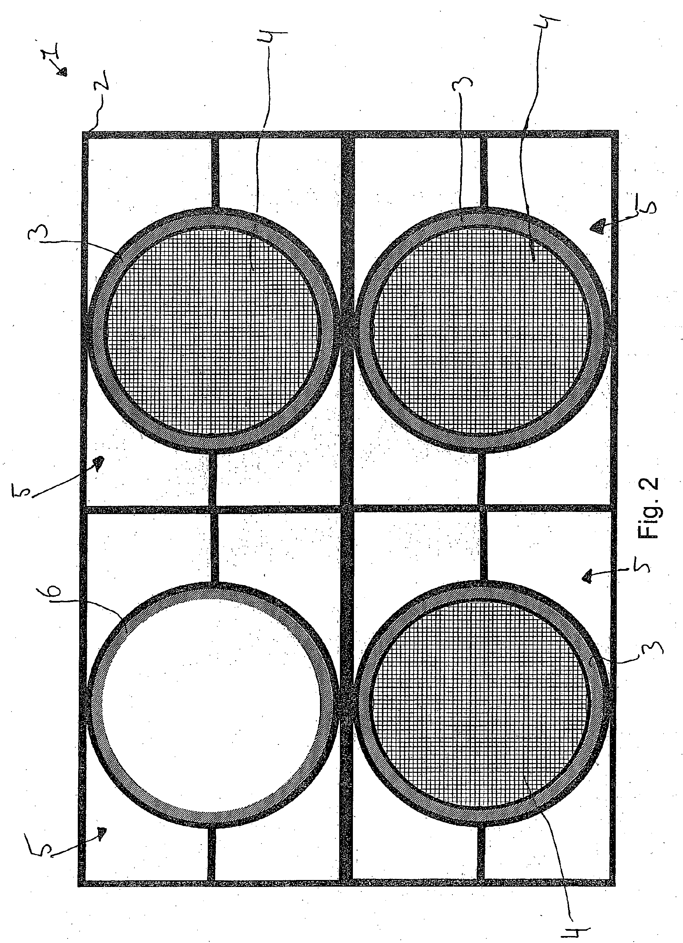

Figure 2 shows a cross section of the blade carrier 1 with four modules 5 at the root receiving end. The annular root receiving pneumatic clamp 6 is in the open position and does not carry a blade 4 compared to the other clamps 3 that is in the closed position.

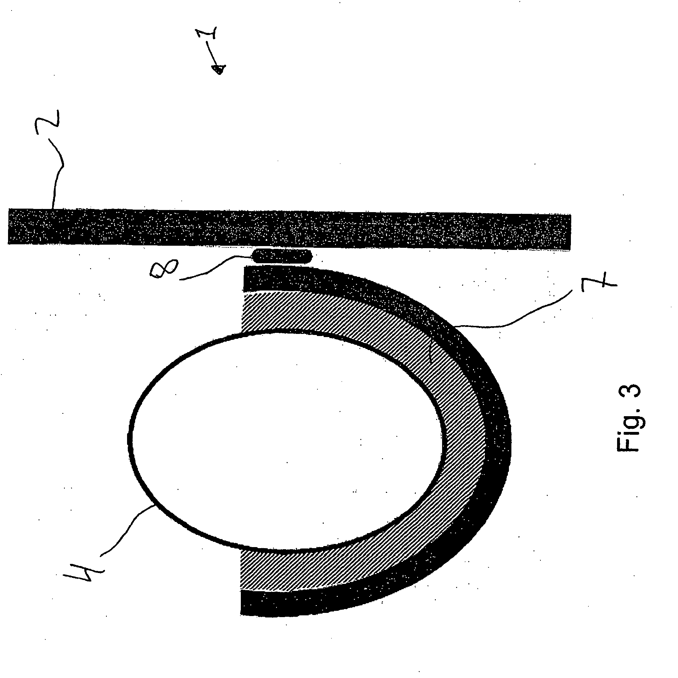

Figure 3 shows a cross section of the blade carrier 1 at the tip receiving end, where a tip receiving pneumatic clamp 7 is connected to the frame 2 by a hinge 8. The clamp 7 is in the closed position and supports a windmill blade 4.

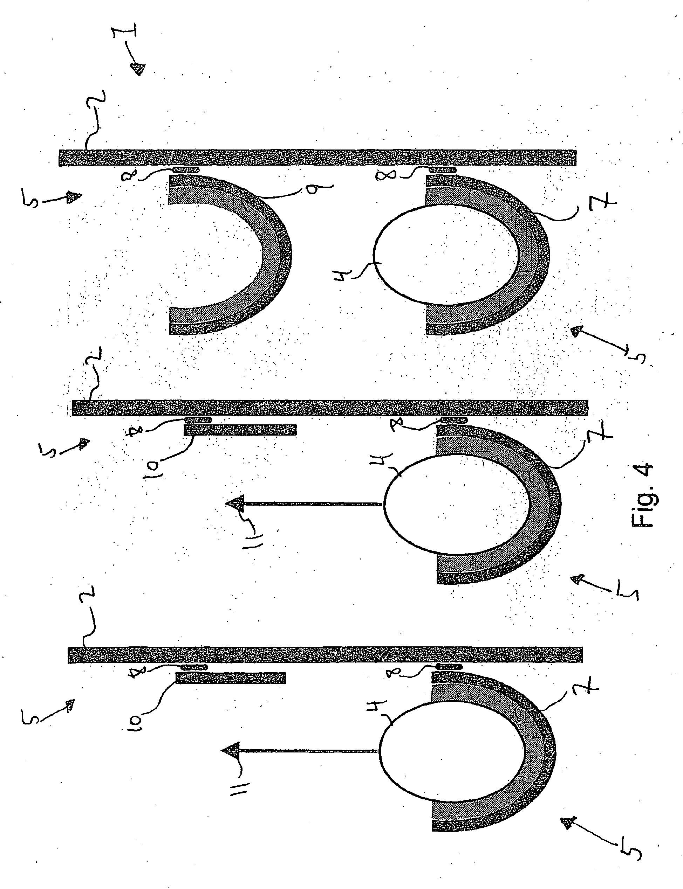

Figure 4 shows a cross section of the blade carrier 1 with four modules 5 at the tip receiving end. One tip receiving pneumatic clamp 9 is shown in the open position, with the blade 4 removed. Two tip receiving pneumatic clamps 10 is shown as rotated around the hinge 8, such that the underlying blade 4 can easily be removed as indicated by the arrow 11.

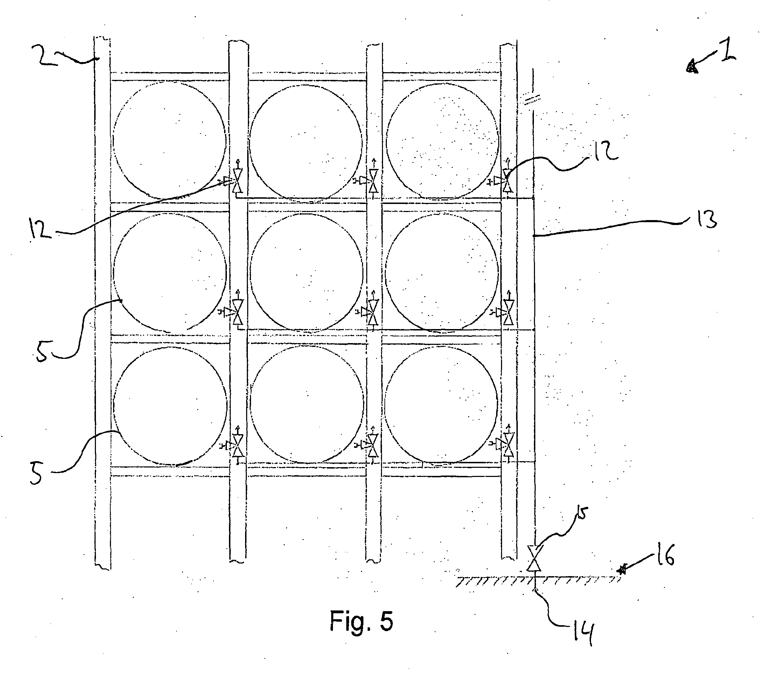

Figure 5 shows a cross section of the blade carrier 1 with nine modules 5 shown. Each module 5 comprises pneumatic activation members 12 that in turn are connected to the pneumatic clamps (not visible). The activation members are supplied via pneumatic conduits 13 by a pneumatic source 14 via a blow-off-valve 15. The pneumatic source 14 is situated at the deck 16 of the vessel (not shown).

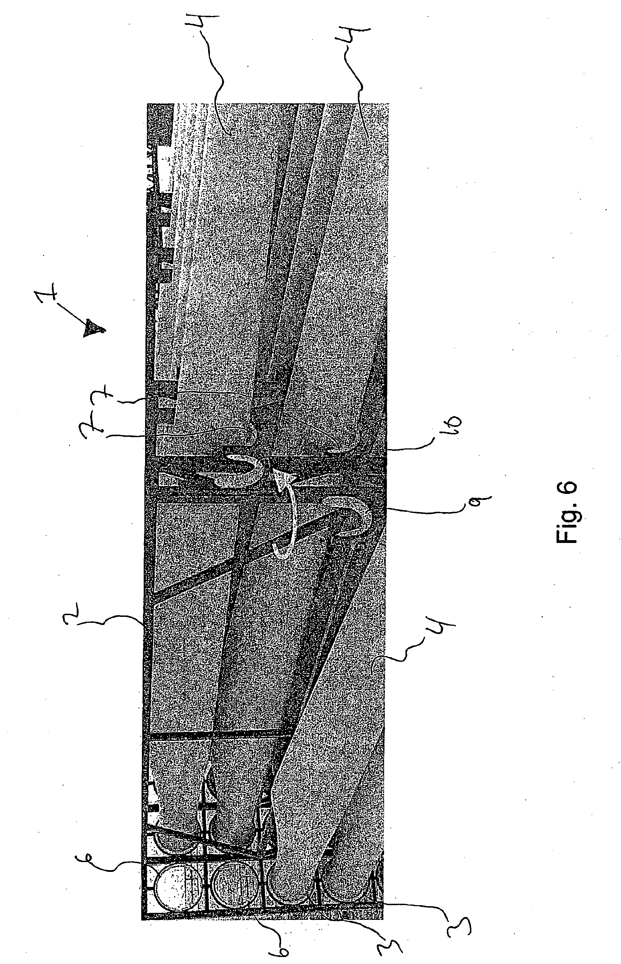

Figure 6 shows an overview of the blade carrier 1. The blade carrier is loaded with blades 4, with a few clamps, 6, 9, 10 being empty, and one tip receiving pneumatic clamp 10 rotated.

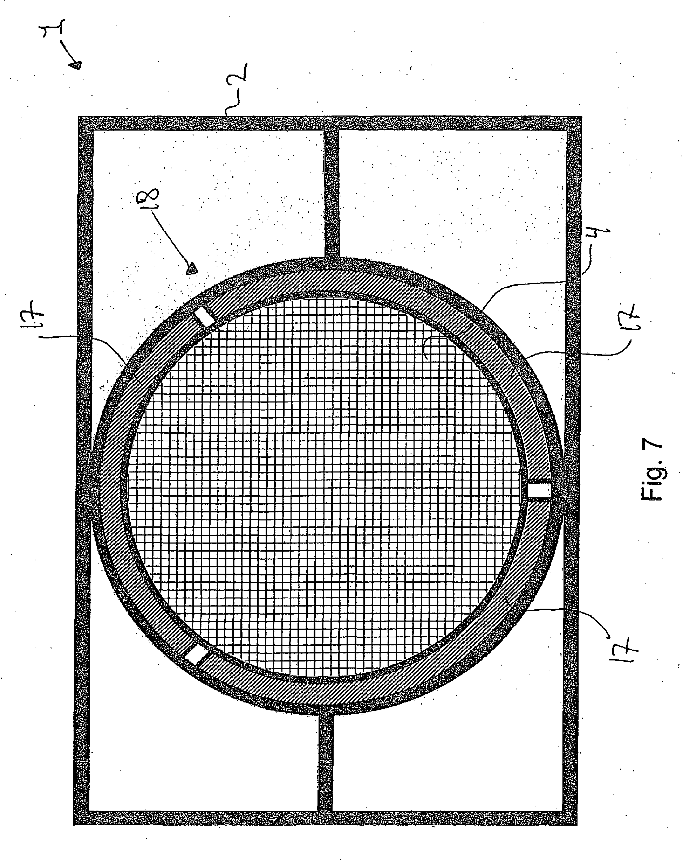

Figure 7 shows a cross section of the blade carrier 1 at the root receiving end. It is shown that the windmill blade 4 is secured by three clamping segments 17 that together form an annular root receiving clamp 18.

## Claims

1. Blade carrier (1), for windmill blades (4), in particular for offshore windmills, comprising a frame (2), where said frame (2) comprises a number of modules (5) each having a root receiving end and a tip receiving end for accommodating one windmill blade (4), **characterized in, that** said root receiving end comprises an annular root receiving pneumatic clamp (3, 6) adapted to receive the root end of a windmill blade (4), that said annular root receiving pneumatic clamp is arranged for establishing an open (6) and a closed (3) state, that said annular root receiving pneumatic clamp (3, 6) comprises an actuator which is operated to change between the two states (3, 6), and where said tip receiving end comprises a tip receiving pneumatic clamp (7, 9, 10) adapted to support part of a windmill blade edge and that said tip receiving pneumatic clamp is arranged for establishing an open (9) and a closed state (7), that said tip receiving pneumatic clamp comprises an actuator which is operated to change between the two states (7, 9), and that the blade carrier (1) comprises pneumatic conduits (13) connecting the pneumatic clamps (3, 6, 7, 9, 10) with a pressure source (14) and that said closed states (3, 7) provides a securing of the blade (4) in the blade carrier (1) whereas the open states (6, 9) makes it possible to insert or remove the blade (4).

2. Blade carrier (1) according to claim 1, **characterized in, that** said annular root receiving pneumatic clamp (3, 6) and the tip receiving pneumatic clamp (7, 9) comprises a passive closed state.

3. Blade carrier (1) according to claim 1, **characterized in, that** a common activating member (12) is provided to activate the actuators in one module (5) for one windmill blade (4).

4. Blade carrier (1) according to any of the preceding claims, **characterized in, that** said tip receiving pneumatic clamp (7, 9, 10) is connected with the tip receiving end of said frame (2) by a hinge (8).

5. Blade carrier (1) according to any of the preceding claims, **characterized in, that** said tip receiving pneumatic clamp (7, 9, 10) is adapted to partially enclose the blade (4).

6. Blade carrier (1) according to claim 4 or 5, **characterized in, that** said tip receiving pneumatic clamp (7, 9, 10) is rotatably arranged on said hinge (8), and where said rotation is pneumatically activated.

7. Blade carrier (1) according to any of the preceding claims, **characterized in, that** said blade carrier (1) comprises releasable connection means adapted to connect individual modules (5) to each other.

8. Blade carrier (1) according to any of the preceding claims, **characterized in, that** said blade carrier (1) system comprises fifteen modules (5) arranged in a three by five pattern.

9. Blade carrier (1) according to any of the preceding claims, **characterized in, that** said annular root receiving pneumatic clamp (3, 6) is comprised of a plurality of clamping segments (17).

10. Method for using a blade carrier (1) according to claim 1, for windmill blades (4), in particular for offshore windmills, **characterized by**, the following steps;
a) providing a blade carrier (1) comprising at least one root receiving pneumatic clamp (3, 6), and at least one tip receiving pneumatic clamp (7, 9, 10),
b) inserting a root end of a blade (4) into a root receiving pneumatic clamp (6),
c) securing said root end in the root receiving pneumatic clamp (6) by pneumatic activation of said root receiving pneumatic clamp (3),
d) inserting a tip end of a blade (4) into a tip receiving pneumatic clamp (9),
e) securing said tip end in the tip receiving pneumatic clamp (9) by pneumatic activation of said tip receiving pneumatic clamp (7).

## Patentansprüche

1. Flügelträger (1) für Windmühlenflügel (4), insbesondere für Offshore-Windmühlen, einen Rahmen (2) umfassend, wobei der Rahmen (2) eine Anzahl Module (5) umfasst, die jeweils ein Basisaufnahmeende und ein Spitzenaufnahmeende zum Unterbringen eines Windmühlenflügels (4) umfasst, **dadurch gekennzeichnet, dass** das Basisaufnahmeende eine ringförmige, pneumatische Basisaufnahme-Einspannung (3, 6) umfasst, die dazu ausgebildet ist, das Basisende eines Windmühlenflügels (4) aufzunehmen, wobei die ringförmige, pneumatische Basisaufnahme-Einspannung so eingerichtet ist, dass sie einen offenen (6) und geschlossenen (3) Zustand etabliert, die ringförmige, pneumatische Basisaufnahme-Einspannung (3, 6) einen Auslöser umfasst, der dazu betätigt wird, zwischen den beiden Zuständen (3, 6) zu wechseln, und wobei das Spitzenaufnahmeende eine pneumatische Spitzenaufnahme-Einspannung (7, 9, 10) umfasst, die dazu ausgebildet ist, Teil eines Windmühlenträgerrands zu stützen, und wobei die pneumatische Spitzenaufnahme-Einspannung so eingerichtet ist, dass sie einen offenen (9) und geschlossenen (7) Zustand etabliert, die pneumatische Spitzenaufnahme-Einspannung einen Auslöser umfasst, der dazu betätigt wird, zwischen den beiden Zuständen (7, 9) zu wechseln, und der Flügelträger (1) pneumatische Leitungen (13) umfasst, welche die pneumatischen Einfassungen (3, 6, 7, 9, 10) mit einer Druckquelle (14) verbinden, und wobei die geschlossenen Zustände (3, 7) dafür sorgen, dass der Flügel (4) in dem Flügelträger (1) fixiert ist, wobei die offenen Zustände (6, 9) das Einführen bzw. Entfernen des Flügels (4) ermöglichen.

2. Flügelträger (1) nach Anspruch 1, **dadurch gekennzeichnet, dass** die ringförmige, pneumatische Basisaufnahme-Einspannung (3, 6) und die pneumatische Spitzenaufnahme-Einspannung (7, 9) einen passiven geschlossenen Zustand umfasst.

3. Flügelträger (1) nach Anspruch 1, **dadurch gekennzeichnet, dass** ein gemeinsames Aktivierungsglied (12) bereitgestellt wird, um die Auslöser in einem Modul (5) für einen Windmühlenflügel (4) zu aktivieren.

4. Flügelträger (1) nach einem der vorangehenden Ansprüche, **dadurch gekennzeichnet, dass** die pneumatische Spitzenaufnahme-Einspannung (7, 9, 10) durch ein Scharnier (8) mit dem Spitzenaufnahme-Ende des Rahmens (2) verbunden ist.

5. Flügelträger (1) nach einem der vorangehenden Ansprüche, **dadurch gekennzeichnet, dass** die pneumatische Spitzenaufnahme-Einspannung (7, 9, 10) dazu ausgebildet ist, den Flügel (4) teilweise zu umschließen.

6. Flügelträger (1) nach Anspruch 4 oder 5, **dadurch gekennzeichnet, dass** die pneumatische Spitzenaufnahme-Einspannung (7, 9, 10) drehbar an dem Scharnier (8) angeordnet ist, und wobei die Drehung pneumatisch aktiviert wird.

7. Flügelträger (1) nach einem der vorangehenden Ansprüche, **dadurch gekennzeichnet, dass** der Flügelträger (1) lösbare Verbindungsmittel umfasst, die dazu ausgebildet sind, einzelne Module (5) miteinander zu verbinden.

8. Flügelträger (1) nach einem der vorangehenden Ansprüche, **dadurch gekennzeichnet, dass** das Flügelträger (1)-System fünfzehn Module (5) umfasst, die in einem drei-mal-fünf-Muster angeordnet sind.

9. Flügelträger (1) nach einem der vorangehenden Ansprüche, **dadurch gekennzeichnet, dass** die ringförmige, pneumatische Basisaufnahme-Einspannung (3, 6) aus einer Vielzahl von Einfassungssegmenten (17) besteht.

10. Verfahren zur Verwendung eines Flügelträgers (1) nach Anspruch 1 für Windmühlenflügel (4), insbesondere für Offshore-Windmühlen, durch die folgenden Schritte gekennzeichnet:
a) Bereitstellen eines Flügelträgers (1), der mindestens eine ringförmige, pneumatische Basisaufnahme-Einspannung (3, 6) und mindestens eine pneumatische Spitzenaufnahme-Einspannung (7, 9, 10) umfasst,
b) Einführen eines Basisendes eines Flügels (4) in eine pneumatische Basisaufnahme-Einfassung (6),
c) Fixieren des Basisendes in der pneumatischen Basisaufnahme-Einfassung (6) durch pneumatische Aktivierung der pneumatischen Basisaufnahme-Einfassung (3),
d) Einführen eines Spitzenendes eines Flügels (4) in eine pneumatische Spitzenaufnahme-Einfassung (9),
e) Fixieren des Spitzenendes in der pneumatischen Spitzenaufnahme-Einfassung (9) durch pneumatische Aktivierung der pneumatischen Spitzenaufnahme-Einfassung (7).

## Revendications

1. Support de pale (1), pour pales d'éolienne (4), en particulier pour éoliennes offshore, comprenant un cadre (2), dans lequel ledit cadre (2) comprend un certain nombre de modules (5) ayant chacun une extrémité de réception de racine et une extrémité de réception de pointe permettant de loger une pale d'éolienne (4), **caractérisé en ce que** ladite extrémité de réception de racine comprend un dispositif de serrage pneumatique de réception de racine annulaire (3, 6) adapté pour recevoir l'extrémité de racine d'une pale d'éolienne (4), **en ce que** ledit dispositif de serrage pneumatique de réception de racine annulaire est agencé pour établir un état ouvert (6) et un état fermé (3), **en ce que** ledit dispositif de serrage pneumatique de réception de racine annulaire (3, 6) comprend un actionneur qui est commandé pour passer de l'un à l'autre des deux états (3, 6), et dans lequel ladite extrémité de réception de pointe comprend un dispositif de serrage pneumatique de réception de pointe (7, 9, 10) adapté pour supporter une partie d'un bord de pale d'éolienne et **en ce que** ledit dispositif de serrage pneumatique de réception de pointe est agencé pour établir un état ouvert (9) et un état fermé (7), **en ce que** ledit dispositif de serrage pneumatique de réception de pointe comprend un actionneur qui est commandé pour passer de l'un à l'autre des deux états (7, 9) et **en ce que** le support de pale (1) comprend des conduits pneumatiques (13) reliant les dispositifs de serrage pneumatiques (3, 6, 7, 9, 10) à une source de pression (14) et **en ce que** lesdits états fermés (3, 7) assurent un blocage de la pale (4) dans le support de pale (1) tandis que les états ouverts (6, 9) permettent d'insérer ou de retirer la pale (4).

2. Support de pale (1) selon la revendication 1, **caractérisé en ce que** ledit dispositif de serrage pneumatique de réception de racine annulaire (3, 6) et le dispositif de serrage pneumatique de réception de pointe (7, 9) comprennent un état fermé passif.

3. Support de pale (1) selon la revendication 1, **caractérisé en ce qu'**un élément d'activation commun (12) est prévu pour activer les actionneurs dans un module (5) pour une pale d'éolienne (4).

4. Support de pale (1) selon l'une quelconque des revendications précédentes, **caractérisé en ce que** ledit dispositif de serrage pneumatique de réception de pointe (7, 9, 10) est relié à l'extrémité de réception de pointe dudit cadre (2) par une charnière (8).

5. Support de pale (1) selon l'une quelconque des revendications précédentes, **caractérisé en ce que** ledit dispositif de serrage pneumatique de réception de pointe (7, 9, 10) est adapté pour entourer en partie la pale (4).

6. Support de pale (1) selon la revendication 4 ou 5, **caractérisé en ce que** ledit dispositif de serrage pneumatique de réception de pointe (7, 9, 10) est agencé de manière rotative sur ladite charnière (8) et dans lequel ladite rotation est activée pneumatiquement.

7. Support de pale (1) selon l'une quelconque des revendications précédentes, **caractérisé en ce que** ledit support de pale (1) comprend des moyens de connexion libérables adaptés pour relier des modules individuels (5) l'un à l'autre.

8. Support de pale (1) selon l'une quelconque des revendications précédentes, **caractérisé en ce que** ledit système support de pale (1) comprend quinze modules (5) agencés dans une configuration trois fois cinq.

9. Support de pale (1) selon l'une quelconque des revendications précédentes, **caractérisé en ce que** ledit dispositif de serrage pneumatique de réception de racine annulaire (3, 6) est composé d'une pluralité de segments de serrage (17).

10. Procédé d'utilisation d'un support de pale (1) selon la revendication 1, pour pales d'éolienne (4), en particulier pour éoliennes offshore, **caractérisé par** les étapes suivantes :
a) fourniture d'un support de pale (1) comprenant au moins un dispositif de serrage pneumatique de réception de racine (3, 6) et au moins un dispositif de serrage pneumatique de réception de pointe (7, 9, 10),
b) insertion d'une extrémité de racine d'une pale (4) dans un dispositif de serrage pneumatique de réception de racine (6),
c) blocage de ladite extrémité de racine dans le dispositif de serrage pneumatique de réception de racine (6) par activation pneumatique dudit dispositif de serrage pneumatique de réception de racine (3),
d) insertion d'une extrémité de pointe d'une pale (4) dans un dispositif de serrage pneumatique de réception de pointe (9),
e) blocage de ladite extrémité de pointe dans le dispositif de serrage pneumatique de réception de pointe (9) par activation pneumatique dudit dispositif de serrage pneumatique de réception de pointe (7).
